# FASCICULE DE BREVET EUROPEEN

(11) **EP 3 732 829 B1**
(45) Date de publication et mention de la délivrance du brevet: **14.09.2022**
(21) Numéro de dépôt: 18827208.2
(22) Date de dépôt: 29.11.2018
(51) Int. Cl.: H04L 41/08, H04W 72/04

(54) **PROCÉDÉ D'ACHEMINEMENT DE DONNÉES D'UNE SESSION INITIALISÉE ENTRE UN TERMINAL ET UN SERVEUR**
VERFAHREN ZUR DURCHFÜHRUNG VON DATEN AUS EINER INITIALISIERTEN SITZUNG ZWISCHEN TERMINAL UND SERVER
METHOD OF ROUTING DATA FROM AN INITIALIZED SESSION BETWEEN TERMINAL AND SERVER

(30) Priorité: 01.12.2017 FR 1761552
(43) Date de publication de la demande: 04.11.2020
(73) Titulaire: Orange, 92130 Issy-les-Moulineaux (FR)
(72) Inventeur: FROMENTOUX, Gaël, 92326 Châtillon Cedex (FR); FIEAU, Frédéric, 92326 Châtillon Cedex (FR); STEPHAN, Emile, 92326 Châtillon Cedex (FR)
(86) Numéro de dépôt international: PCT/FR2018/053047
(87) Numéro de publication internationale: WO 2019/106308

(56) Documents cités:
- WO-A1-2017/200978
- CN-A- 106 851 589
- US-A1- 2017 303 259

## Description

### 1. Domaine de l'invention

La demande d'invention se situe dans le domaine des infrastructures de télécommunications et des techniques relatives aux tranches de réseaux (en anglais *network slices*).

### 2. Etat de la technique antérieure

Jusqu'à la génération « 4G » de réseau mobile actuellement en cours de déploiement dans une majorité de pays, les différentes architectures de réseau reposent le plus souvent sur des équipements bien spécifiques et dédiés à certaines fonctionnalités précises, que ce soit au niveau du réseau d'accès ou du cœur de réseau, notamment en ce qui concerne la transmission de paquets depuis ou à destination d'un terminal mobile. Dans les infrastructures de réseau déployées jusqu'à maintenant, un unique ensemble de fonctions est utilisé quel que soit le type de trafic. Les différents flux des sessions sont ainsi écoulés par un même ensemble de fonctions (routage, adressage, contrôle des flux de données, nommage...).

Le manque de flexibilité et d'évolutivité inhérent à ce type d'architecture conventionnelle a amené à envisager l'adoption d'architectures plus flexibles pour les prochaines générations de réseaux mobiles, à commencer par la génération dite « 5G », afin de pouvoir répondre rapidement à des demandes extrêmement diverses en termes de trafic ou de qualité de service. Il est à noter que les réseaux 5G ont vocation à concerner aussi bien les réseaux mobiles que les réseaux fixes. Par conséquent, les techniques inhérentes au développement des réseaux 5G concernent aussi bien les infrastructures fixes que mobiles.

Parmi les solutions envisagées, une des solutions les plus prometteuses repose sur une technique de découpage par tranches du réseau (« Network Slicing » en anglais).

La 5G va en effet devoir supporter des cas d'usages très divers et fera face à des exigences extrêmes (p.e. en termes de débit, efficacité énergétique, variété des équipements, fractionnement des acteurs...) pour lesquelles la flexibilité et l'évolutivité des réseaux seront indispensables. La technique de "Network Slicing", qui peut être considérée comme une technique permettant de mettre en œuvre des instances spécifiques de chemins de communication sur une même infrastructure physique, le plus souvent à partir de techniques relatives à la virtualisation. Cette technique permet à l'opérateur de créer des réseaux adaptés aux différents besoins (opérateur, fournisseur de services, clients) et de fournir des solutions qui répondent à des exigences diverses issues de différents secteurs de marché. Ces solutions sont optimisées par exemple en termes de fonctions d'acheminement, de performance et d'étanchéité entre applications ou entre clients.

A ce jour, selon les techniques connues, plusieurs méthodes sont envisagées pour attribuer une tranche de réseau (ou *slice* en anglais) à un terminal et font l'objet de propositions, notamment en normalisation (3GPP TR 23.799 v2.0.0 de décembre 2016 ou Wireless technology évolution towards 5G: 3GPP release 13 to 15 and beyond -5G americas - February 2017 - p 163 -167). Des exemples se trouvent aussi dans WO2017/200978, US2017/0303259 et EP3343980.

Il n'existe pas de solutions qui attribuent un slice en fonction des solutions techniques déployées ou en cours de déploiement par les fournisseurs d'applications, aussi appelés tiers dans certains documents ou « third party » en anglais. Ces tiers interviennent aussi bien dans des secteurs considérés comme « verticaux » (Ville intelligente (en anglais « Smart City », Santé, ...) dans la terminologie utilisée dans les spécifications des réseaux 5G que dans la fourniture de services de communication (en anglais « Communication Services Providers » (CSPs)) aussi appelés *Over The Top* (OTT). Ces tiers disposent en effet de leur propre infrastructure technique permettant de fournir des services aux clients via Internet et les réseaux, de type fixes ou mobiles. Ces infrastructures techniques se composent notamment de serveurs, de caches, de plateformes de services d'acheminement et de traitement des flux, qui utilisent des solutions techniques spécialisées ou normalisées. Il est à noter que ces infrastructures techniques peuvent également utiliser les techniques relatives aux « tranches de réseau » et associer une tranche à des caractéristiques de trafic notamment.

Il n'existe cependant pas de solution donnant une visibilité des tranches aux extrémités, terminal ou serveur. Il n'est donc pas possible, par exemple, d'attribuer une tranche en fonction de caractéristiques de communication des applications OTT, par exemple dans la couche transport et/ou applicative, dans un contexte où celles-ci évoluent de façon significative, notamment grâce aux actions des tiers.

La présente invention a pour objet de remédier à des inconvénients des techniques aujourd'hui mises en œuvre.

### 3. Exposé de l'invention

L'invention vient améliorer la situation à l'aide d'un procédé d'acheminement de données d'une session initialisée entre un terminal et un serveur, sur une première tranche de réseau correspondant à un ensemble de fonctions de traitement des données d'une infrastructure de communication, mis en œuvre par le terminal et caractérisé en ce qu'il comprend les étapes suivantes :
- réception en provenance du serveur d'au moins un identifiant d'acheminement déterminé en fonction d'au moins un paramètre de communication de la session,
- configuration d'une information de session en fonction de l'au moins un identifiant reçu,
- émission à destination du serveur des données suivantes de la session acheminées sur au moins une deuxième tranche correspondant à l'information configurée.

Selon les techniques antérieures, la sélection dynamique d'une tranche de réseau est soit réalisée par le terminal, dans le cas où il détient une information lui permettant de sélectionner une tranche correspondant à des caractéristiques de trafic, de terminal, d'application ou à une combinaison de ces informations, soit effectuée par l'opérateur de l'infrastructure de communication. Grâce à cette invention, le serveur distant détecte qu'une tranche de réseau sélectionnée pour la session n'est pas adaptée à des paramètres de la communication. Il est considéré ici qu'une session peut être mono-chemin ou multi-chemin et se caractérise par une communication de bout en bout entre le terminal et le serveur pour une ou plusieurs applications. Un paramètre de communication d'une session se caractérise par une information émise ou reçue par l'une ou l'autre des extrémités de la session, en l'occurrence le terminal ou le serveur. Un paramètre de communication n'est pas spécifique à une couche du modèle OSI (en anglais Open Systems Interconnection).

La première tranche choisie par le terminal peut notamment être non adaptée car les données de la session ne seront pas traitées par les bons équipements lors de leur acheminement. Ainsi ces données pourraient ne pas bénéficier de fonctions avancées de traitement ou bien par exemple ne pas être sécurisées. Le serveur détermine alors qu'une nouvelle tranche doit être utilisée par le terminal pour cette session. Cette détermination est réalisée en fonction de paramètres de communication, présents indifféremment dans des en-têtes des paquets ou des trames utilisées pour l'acheminement des données ou bien dans les données applicatives de la session. Une fois que le serveur a déterminé un ou des nouveaux identifiants d'acheminement, il en informe le terminal. Il est à noter qu'une session peut être multi-chemins et donc également multi - tranches et que pour une session, plusieurs tranches de réseaux seront utilisées pour l'acheminement des données de la session. Par exemple une tranche est utilisée pour les données de type temps-réel et une tranche pour les données de type non temps-réel de la session.

Le terminal transmet ensuite les données supplémentaires de la session en modifiant ces données par la configuration d'une information de session et ainsi permettre l'acheminement de ces données sur une ou plusieurs tranches différentes, en fonction de l'information de session configurée. Par exemple, le terminal peut configurer une information d'un champ du protocole SFC (en anglais Service Function Chaining). Les données de la session sont ainsi transmises sur les tranches de réseaux correspondant au paramètre configuré, le gestionnaire de réseau affectant une ou plusieurs tranches correspondant à l'information configurée. Le terminal peut lui-même sélectionner la nouvelle tranche de réseau ou les nouvelles tranches de réseaux. Dans ce cas, l'information de session est un ou des identifiants de tranches. Selon un autre exemple, la sélection d'une deuxième ou de plusieurs tranche(s) de réseau est réalisée par un autre dispositif au sein de l'infrastructure acheminant les données de la session.

Ce procédé permet ainsi qu'un terminal puisse acheminer des données d'une session en fonction des recommandations d'un serveur distant, celui-ci pouvant ainsi par exemple assurer un traitement spécifique aux données de la session sans systématiquement analyser le contenu des paquets ou des trames de la session, lui économisant ainsi des ressources et autorisant une rapidité de traitement accrue.

Selon une caractéristique particulière, la session est chiffrée par le terminal et déchiffrée le serveur.

Une session chiffrée et déchiffrée par les deux extrémités, le terminal et le serveur, induit que des dispositifs intermédiaires ne peuvent accéder à certaines informations transmises entre le terminal et le serveur. Les informations utiles à l'acheminement des données sont ainsi généralement non chiffrées tandis que les informations relatives aux applications sont chiffrées. Comme le serveur est le seul dispositif à pouvoir accéder aux données chiffrées, il est en capacité de les exploiter pour intervenir sur le choix de la tranche de réseau qui achemine les données dans l'infrastructure.

Selon une caractéristique particulière, la session est initialisée par le terminal en configurant une information de session par défaut.

Dans le cas où aucune information relative à l'identifiant d'acheminement n'est obtenue par le terminal, les données d'une session doivent être néanmoins transmises sur une première tranche de l'infrastructure de communication. Si le terminal ne configure aucune information, le gestionnaire du réseau de communications sélectionne une première tranche par défaut. Le terminal sélectionne ainsi une information par défaut, en correspondance par exemple avec l'application ou le serveur distant de la session, pour que les données de la session transmises avant l'envoi d'un identifiant d'acheminement par le serveur distant, ou en l'absence d'envoi d'un tel identifiant, bénéficie d'une première tranche de réseau pour l'acheminement des données.

Selon une caractéristique particulière, l'information de la session est une donnée relative à une information NSSAI.

L'information de la session configurée par le terminal peut avantageusement être relative à l'information NSSAI (Network Slice Selection Assistance Information). Cette information définie au 3GPP (document TS 23.501 version 1.5.0, 13 novembre 2017) peut avantageusement être utilisée notamment en raison de sa probable grande utilisation dans les réseaux de communication. Ainsi, les données comprenant cette information NSSAI peuvent être acheminées sur une tranche de réseau mise en œuvre par un gestionnaire d'infrastructure, indépendamment des contrats ou relations entre le gestionnaire de l'infrastructure et l'utilisateur du terminal.

Selon une caractéristique particulière, le terminal met en mémoire l'au moins un identifiant reçu en fonction des paramètres de communication de la session.

Dans le but de limiter les échanges entre le serveur et le terminal, le terminal peut avantageusement mémoriser les identifiants d'acheminement reçus pour des sessions précédentes ainsi que les paramètres de communication des sessions correspondantes de façon à exploiter à nouveau ces identifiants lors d'une prochaine session ayant les mêmes paramètres de communication. Les premières données émises peuvent ainsi être acheminées sur une tranche de réseau adaptée aux données de la session en configurant une information de session correspondant à l'identifiant mémorisé. Le serveur pourra néanmoins émettre vers le terminal un autre identifiant pour cette nouvelle session, dans le cas où une autre tranche est plus adaptée ou si la première tranche initialement utilisée pour l'acheminement des données présente par exemple des problèmes.

Les différents aspects du procédé d'acheminement qui viennent d'être décrits peuvent être mis en œuvre indépendamment les uns des autres ou en combinaison les uns avec les autres.

Selon un deuxième aspect, l'invention concerne également un procédé de détermination d'au moins un identifiant d'acheminement de données d'une session initialisée entre un terminal et un serveur sur une première tranche de réseau correspondant à un ensemble de fonctions de traitement des données d'une infrastructure de communication, mis en œuvre par le serveur et caractérisé en ce qu'il comprend les étapes suivantes :
- détermination d'au moins un identifiant d'acheminement en fonction d'au moins un paramètre de communication de la session,
- émission à destination du terminal de l'au moins un identifiant déterminé,
- réception en provenance du terminal des données suivantes de la session acheminées sur au moins une deuxième tranche.

A la réception de données émises par un terminal, un serveur identifie que la première tranche de réseau utilisée pour l'acheminement des données n'est pas adaptée. Dans le cas par exemple, ou un ensemble de traitements est associé à une tranche de réseau, la sélection d'une première tranche de réseau non adaptée par le terminal conduit à ce que des traitements ne soient pas appliqués sur les données de la session. A partir de paramètres de communication, tel qu'une adresse du terminal, un paramètre de qualité de service, ou un paramètre du protocole de transport, le serveur constate qu'une (ou plusieurs) deuxième tranche plus adaptée doit être sélectionnée et détermine cette nouvelle tranche en fonction de différents paramètres. Ce procédé permet au serveur de mettre à jour dynamiquement une utilisation d'une ou plusieurs deuxième tranches de réseau pour les données d'une session émises par un terminal. Ce procédé peut par exemple être mis en œuvre pour prendre en compte des problèmes survenus sur l'infrastructure ou pour prendre en compte de nouveaux besoins exprimés par l'entité en charge du serveur ou par une entité externe ayant exprimé une demande auprès du serveur. En outre dans le cas de sessions de données chiffrées, le serveur est la seule entité à pouvoir accéder à des paramètres de communication chiffrés, ce qui lui confère des possibilités de détermination d'identifiants d'acheminement que des dispositifs intermédiaires n'ont pas.

Selon une caractéristique particulière, l'au moins un paramètre est relatif à la couche transport de la session.

La couche transport des réseaux de communication est en forte évolution, et comporte de plus en plus de fonctions élémentaires de traitement. Des protocoles de transport « multi-chemins » sont en outre en développement. Le serveur peut avantageusement tirer parti de la richesse fonctionnelle des paramètres de transport pour déterminer une ou plusieurs deuxième tranches de réseau permettant d'acheminer les données en fonction de ces paramètres. Ces paramètres sont en outres de plus en plus chiffrés et il est intéressant pour le serveur de tirer parti de l'accès à ces paramètres qu'il aura déchiffrés pour adapter le traitement des données en déterminant un identifiant d'acheminement permettant d'acheminer les données sur une ou plusieurs tranches de réseau. Le protocole TLS (en anglais Transport Layer Security) est notamment un des principaux protocoles de transport assurant une sécurisation des données transmises. Les données transportées dans le protocole TLS étant seulement accessibles par le terminal et le serveur, ce dernier peut par exemple utiliser les paramètres TLS pour déterminer un identifiant d'acheminement adapté aux paramètres du protocole TLS, ces données pouvant être communes à plusieurs applications.

Selon une caractéristique particulière, l'au moins un paramètre est relatif au protocole QUIC.

Le protocole de transport QUIC (en anglais Quick UDP Internet Connections) spécifié dans le document « draft-ietf-quic-transport-07 », 13 Octobre 2017, est un protocole de transport de plus en plus utilisé dans les réseaux de communication. Ce protocole comprend un nombre important d'informations parmi lesquelles des informations relatives au contexte de multi-attachement, des informations de sécurisation ainsi que des informations relatives au flux de données. Sa richesse en terme de fonctions élémentaires et son utilisation de plus en plus importante rendent ce protocole particulièrement pertinent pour la détermination d'un identifiant d'acheminement.

Selon une caractéristique particulière, l'au moins un paramètre est relatif à la version de protocole de la couche transport.

Les protocoles de transport, notamment ceux en cours de spécification dans les organismes de normalisation, évoluent de façon assez régulière au fur et à mesure des versions proposées. Une version d'un protocole peut ainsi intégrer des paramètres de qualité de service ou de sécurité inexistants dans la version précédente. C'est notamment le cas pour les différentes versions du protocole QUIC. Les données d'une session peuvent ainsi nécessiter des traitements spécifiques en fonction des paramètres caractéristiques d'une version de protocole. La version de protocole peut avantageusement renseigner sur les traitements requis et la détermination de l'identifiant d'acheminement en fonction de la version de protocole peut être adaptée aux besoins du gestionnaire du serveur.

Selon une caractéristique particulière, l'au moins un identifiant est émis dans une donnée d'un protocole de transport.

Pour transmettre l'identifiant d'acheminement déterminé au terminal, le serveur peut utiliser un protocole de transport. En effet, le protocole de transport est assez évolutif et comprend régulièrement de nouvelles fonctions. C'est le cas par exemple des protocoles QUIC ou MPTCP (en anglais MultiPath Transport Control Protocol). En outre, les protocoles de transport sont des protocoles de bout en bout, sans modification possible dans le cas où le protocole est chiffré. Il apparait donc intéressant de transmettre l'identifiant d'acheminement dans le protocole de transport, pour qu'il parvienne de façon sure et non modifié au terminal qui peut alors l'exploiter pour configurer une information de la session.

Les différents aspects du procédé de détermination qui viennent d'être décrits peuvent être mis en œuvre indépendamment les uns des autres ou en combinaison les uns avec les autres.

Selon un troisième aspect, l'invention concerne un dispositif d'acheminement de données d'une session initialisée entre un terminal et un serveur, sur une première tranche de réseau correspondant à un ensemble de fonctions de traitement des données d'une infrastructure de communication, mis en œuvre par le terminal et caractérisé en ce qu'il comprend :
- un récepteur, apte à recevoir en provenance du serveur au moins un identifiant d'acheminement déterminé en fonction d'au moins un paramètre de communication de la session,
- un module de configuration, apte à configurer une information de session en fonction de l'au moins un identifiant reçu,
- un émetteur, apte à émettre à destination du serveur les données suivantes de la session acheminées sur au moins une deuxième tranche correspondant à l'information configurée.
Ce dispositif, apte à mettre en œuvre dans tous ses modes de réalisation le procédé d'acheminement qui vient d'être décrit, est destiné à être mis en œuvre dans un équipement d'extrémité, de type terminal.

Selon un quatrième aspect, l'invention concerne en outre un dispositif de détermination d'au moins un identifiant d'acheminement de données d'une session initialisée entre un terminal et un serveur sur une première tranche de réseau correspondant à un ensemble de fonctions de traitement des données d'une infrastructure de communication, mis en œuvre par le serveur et caractérisé en ce qu'il comprend :
- un module de détermination, apte à déterminer au moins un identifiant d'acheminement en fonction d'au moins un paramètre de communication de la session,
- un émetteur, apte à émettre à destination du terminal l'au moins un identifiant déterminé,
- un récepteur, apte à recevoir en provenance du terminal les données suivantes de la session acheminées sur au moins une deuxième tranche.

Ce dispositif est apte à mettre en œuvre dans tous ses modes de réalisation le procédé de détermination qui vient d'être décrit. Ce dispositif est destiné à être mis en œuvre dans un équipement d'extrémité, de type serveur de données.

Selon un cinquième aspect, l'invention concerne aussi un système d'acheminement de données d'une session initialisée entre un terminal et un serveur, sur une première tranche de réseau correspondant à un ensemble de fonctions de traitement des données d'une infrastructure de communication:
- un terminal comprenant un dispositif d'acheminement,
- un serveur comprenant un dispositif de détermination.

L'invention concerne aussi un programme d'ordinateur comprenant des instructions pour la mise en œuvre des étapes du procédé d'acheminement qui vient d'être décrit, lorsque ce programme est exécuté par un processeur.

L'invention concerne en outre un programme d'ordinateur comprenant des instructions pour la mise en œuvre des étapes du procédé de détermination qui vient d'être décrit, lorsque ce programme est exécuté par un processeur.

Ces programme peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions des programmes d'ordinateur tel que mentionnés ci-dessus.

Le support d'informations peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente une vue simplifiée d'une infrastructure de communications mettant en œuvre le procédé d'acheminement de données selon un aspect de l'invention,
- la figure 2 présente un aperçu du procédé d'acheminement de données, selon un premier mode de réalisation de l'invention,

- la figure 3 présente un aperçu du procédé d'acheminement de données, selon un deuxième mode de réalisation de l'invention,
- la figure 4 présente un aperçu du procédé d'acheminement de données, selon un troisième mode de réalisation de l'invention,
- la figure 5 présente un exemple de structure d'un dispositif d'acheminement selon un aspect de l'invention.
- la figure 6 présente un exemple de structure d'un dispositif de détermination selon un aspect de l'invention.

### 5. Description détaillée d'au moins un mode de réalisation de l'invention

Dans la suite de la description, on présente des exemples de plusieurs modes de réalisation de l'invention dans une infrastructure de communication, qui peut être fixe et/ou mobile.

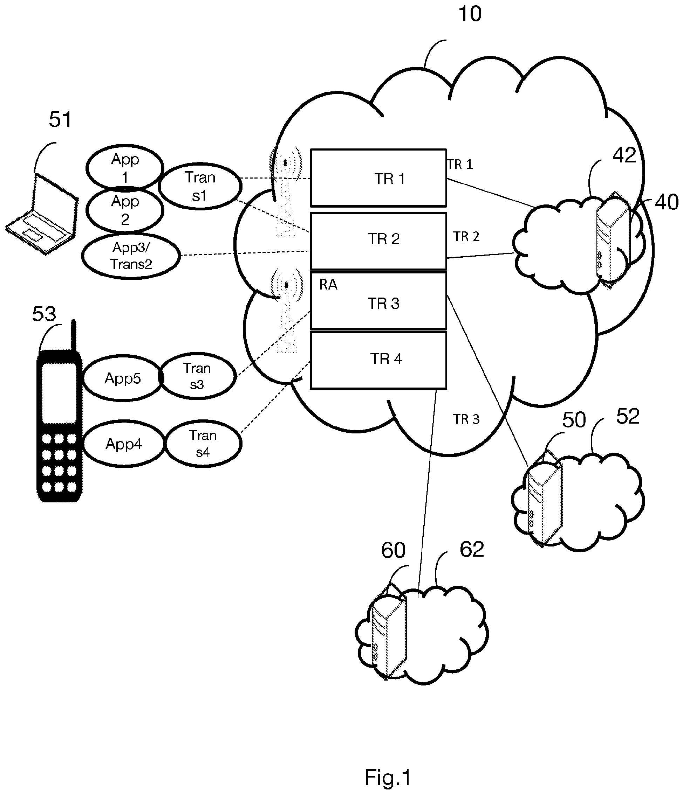

On se réfère tout d'abord à la figure 1 qui présente une vue simplifiée d'une infrastructure de communications mettant en œuvre le procédé d'acheminement de données selon un aspect de l'invention.

Sur la figure 1, deux terminaux 51 et 53 sont attachés à une infrastructure 10 de communications. Sur le terminal 51, trois applications App1, App2 et App3 sont activées. Les flux de données relatifs aux applications App1 et App2 sont acheminés par une couche de transport Transi. Les flux de données de l'application App3 du terminal 51 sont acheminés sur une autre couche de transport Trans2. Les couches de transport Trans1 et Trans 2 peuvent être complètement distinctes, c'est-à-dire basés sur des protocoles différents, comme par exemple TCP (en anglais Transport Control Protocol) et UDP (en anglais User Datagram Protocol). Selon un autre exemple, les deux couches de transport Trans1 et Trans2 peuvent être des versions différentes d'un même protocole, comme par exemple QUIC version1 et QUIC version2. Selon encore un autre exemple, Trans1 et Trans2 peuvent être une même version de protocole mais avec des configurations différentes. Sur le terminal 53, les applications App4 et App5 dont les flux de données sont respectivement acheminées par les couches de transport Trans4 et Trans3. Dans la suite du document, les données d'une application App1 sur une couche de transport Trans1 seront notées les données App1/Trans1.

Il est considéré que l'application App1/Trans1 du terminal 51 établit une session de données avec le serveur 40 installé dans un réseau 42 local. Le serveur peut par exemple être un serveur HTTP (en anglais HyperText Transfer Protocol) et l'infrastructure 42 local une ferme de serveurs. L'application App2/Trans1 établit une session avec le serveur 40. L'application App3/trans2 établit une session avec le serveur 40. L'application App5/trans3 établit une session de données avec le serveur 50 du réseau 52 local. L'application App4/Trans4 établit une session avec le serveur 60 du réseau 62 local. Le réseau 42 local, comme les réseaux 52 et 62, peut en outre comprendre des dispositifs de traitement des flux de données tels que des pare-feu ou des fonctions d'optimisations, de façon non limitative.

L'infrastructure 10 de communications est organisée en tranches permettant à des flux de données ayant des caractéristiques communes en termes d'acheminement, de qualité de service ou de sécurité, d'être acheminées sur une même tranche. Il est à noter que la structuration des tranches et l'association des flux de données sur les différentes tranches est du ressort du gestionnaire de l'infrastructure 10 de communications. Les tranches de l'infrastructure peuvent, selon une alternative, être uniquement mises en œuvre dans l'infrastructure 10 ou bien être instanciées dans l'infrastructure 10 et les terminaux 51 et 53 et/ou les réseaux locaux 42, 52, 62. Dans la figure 1, il est considéré que les flux de données App1/Trans1 sont acheminés vers le serveur 40 sur une tranche de réseau Tr1. Les flux de données App2/Trans2 et les flux de données App3/Trans2 sont acheminés sur une tranche TR2 vers le même serveur 40. Les flux de données App5/Trans3 sont acheminés vers le serveur 40 sur une tranche TR3 et les flux App4/Trans4 vers le serveur 60 sur une tranche TR4.

Il est à noter en outre qu'un même serveur peut héberger plusieurs applications, comme c'est le cas sur la figure 1 pour le serveur 40 qui héberge les applications App1, App2 et App3. Les tranches de réseau mises en œuvre peuvent être spécifiques à l'infrastructure 10. Dans ce cas, le gestionnaire ne transmet pas d'informations sur les tranches de réseau de l'infrastructure aux terminaux, ni aux serveurs. Dans le cas où par exemple, le gestionnaire de l'infrastructure 10 est aussi le gestionnaire d'un terminal et/ou d'un serveur ou bien qu'un contrat est établi entre les gestionnaires respectifs, un terminal et/ou un serveur peut avoir connaissance des tranches déployées par le gestionnaire de l'infrastructure 10.

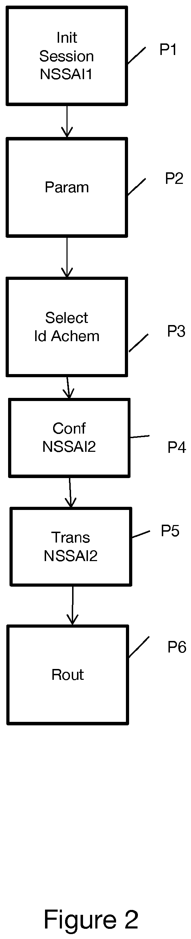

En relation avec la **figure 2****,** on présente un aperçu du procédé d'acheminement de données, selon un premier mode de réalisation de l'invention.

Le schéma synoptique de la **figure** 2 a pour objectif de décrire façon générique les phases de mise en œuvre du procédé dans une infrastructure de communications. Lors d'une phase P1, un terminal initie une session avec un serveur. Il peut s'agir d'une session applicative de type HTTP, FTP (en anglais File Transfer Protocol) ou, de façon non limitative, une session P2P (en anglais Point-to-Point).
Par défaut, lors de l'initialisation de la session, le terminal ne disposant pas d'information de session envoyée par le serveur, le terminal configure une information de session par défaut dans les messages envoyés vers le serveur. Selon un exemple, cette information de session peut aussi être la dernière information obtenue d'un serveur. Cette information peut être un champ spécifique d'un protocole de chainage de services, tel que SFC (en anglais Service Function Chaining) ou une donnée ajoutée dans un protocole, par exemple de transport ou applicatif, qui peut être exploité par l'infrastructure de communication acheminant les données vers le serveur.

Si l'information de session ne peut être directement exploitée pour acheminer les données de la session sur une tranche, elle est alors interprétée par un dispositif du réseau, en charge d'aiguiller les flux des différentes sessions dans les tranches de l'infrastructure de communication. Ce dispositif, à la réception des données de session transmises par le terminal, établit une correspondance entre l'information de session et une tranche, pour transmettre les données de la session sur une tranche, dite première tranche. Les données de la session sont ici acheminées sur une première tranche par défaut conformément à l'information par défaut configurée par le terminal. Dans l'exemple décrit, le terminal ajoute une information de session NSSAI1 et le dispositif de l'infrastructure de communication ajoute un identifiant de première tranche, correspondant à l'information de session NSSAI1 configurée par le terminal. Il l'ajoute par exemple dans un champ du protocole de transport utilisé pour l'acheminement des données de la session.

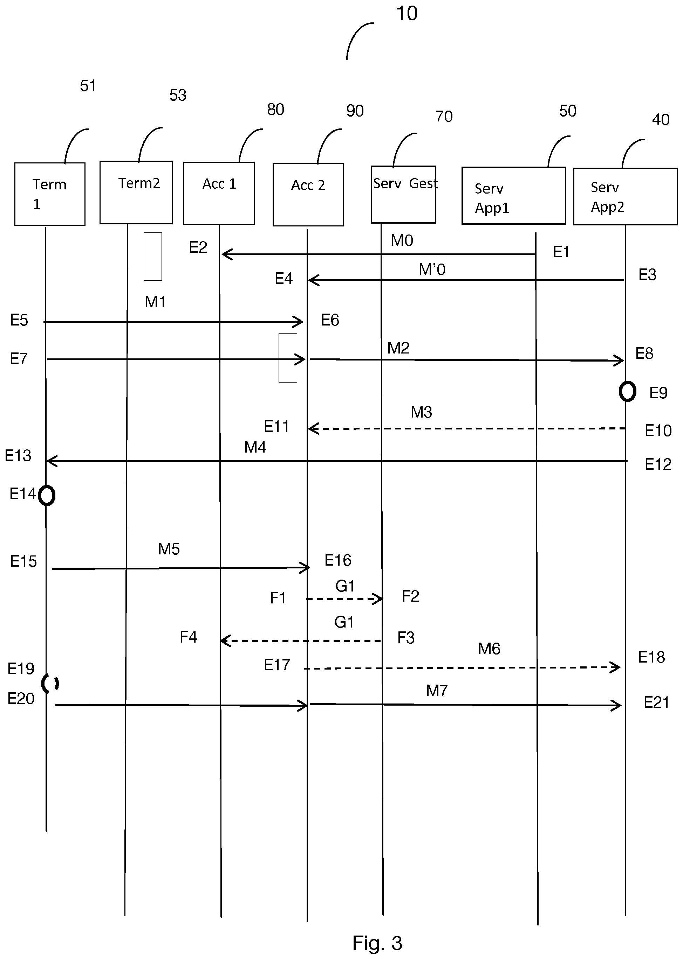

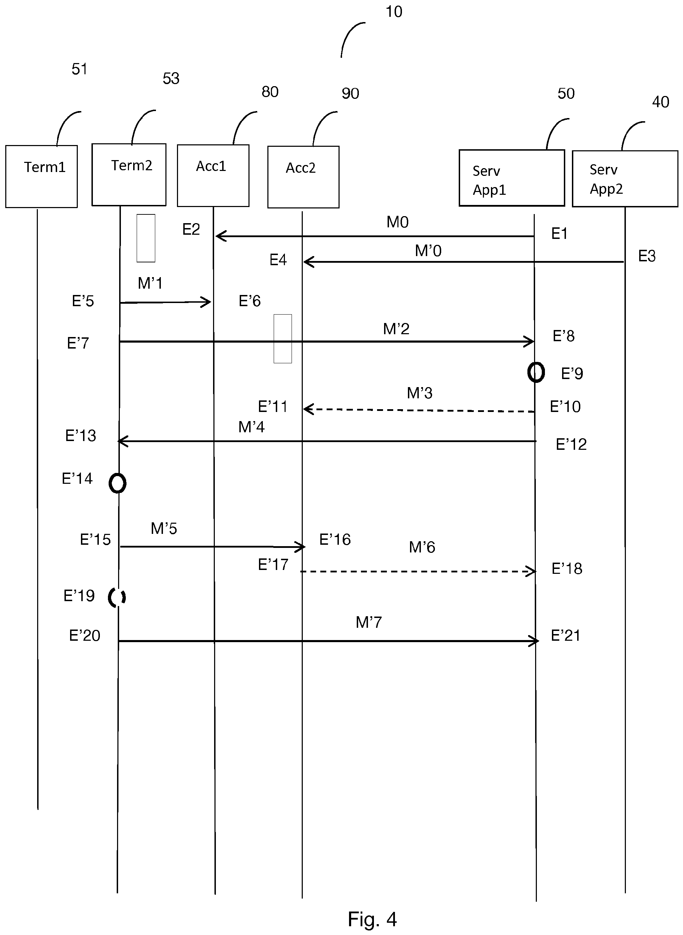

Lors de la phase P2, le serveur reçoit les données de la session émises par le terminal lors de la phase P1 et détermine qu'un nouvel identifiant d'acheminement doit être utilisé par le terminal pour les données restantes de la session. Pour déterminer qu'un nouvel identifiant d'acheminement devra être utilisé par le terminal, le serveur analyse les paramètres de communication de la session. Parmi ces paramètres, le serveur identifie par exemple l'information NSSAI1 de session ajoutée par le terminal ainsi que possiblement d'autres champs du protocole de transport et/ou des champs du protocole applicatif dont différents exemples seront donnés dans les figures 3 et 4. Il peut aussi utiliser pour la détermination d'un identifiant, l'identifiant de première tranche utilisé par l'infrastructure de communication dans le cas où cet identifiant lui est communiqué.

Lors de la phase P3, le serveur détermine un identifiant d'acheminement correspondant aux paramètres analysés lors de la phase P2. Le gestionnaire du serveur aura eu précédemment connaissance des tranches de réseau mises en œuvre dans le réseau de communication acheminant les données de la session ainsi que de leurs caractéristiques. Le serveur sélectionne au moins un identifiant d'acheminement dont les caractéristiques correspondent aux paramètres de la session et le transmet au terminal. L'identifiant d'acheminement peut être un identifiant de tranche de l'infrastructure de communication mais il peut aussi être un identifiant d'acheminement propre au serveur et au terminal pour lequel une correspondance avec un identifiant de tranche de l'infrastructure de communication doit être effectué. Le serveur transmet l'identifiant au terminal dans un champ d'un protocole utilisé pour la session ou bien il transmet cette information en utilisant un protocole spécifique. Si la session est une session de type HTTP/TCP, le serveur peut renvoyer l'information dans le protocole HTTP ou le protocole TCP, voire utiliser un protocole différent.

A la réception du nouvel identifiant transmis par le serveur, lors de la phase P4, le terminal configure une nouvelle information NSSAI2 de session, correspondant à l'identifiant d'acheminement reçu. Selon un exemple, l'information de session peut être identique à l'identifiant d'acheminement. Il peut aussi s'agir d'une information à mettre à jour dans un protocole, tel que par exemple un paramètre de qualité de service. Les données de la session dont dorénavant émises avec cette information de session mise à jour.

Lors de la phase P5, le terminal émet les données de la session avec l'information de session mise à jour, permettant aux données de la session d'être acheminées sur une deuxième tranche de réseau correspondant aux caractéristiques de la session, ces caractéristiques étant formalisées avec l'information de session. L'information de session est interprétée par un dispositif du réseau et le dispositif ajoute un identifiant de deuxième tranche aux données transportées dans l'infrastructure de communication, leur permettant d'être acheminées dans une tranche adaptée aux caractéristiques de la session lors de la phase P6.
Il est à noter que le serveur et le dispositif de l'infrastructure de communication sélectionnent possiblement un identifiant d'acheminement et de deuxième tranche en fonction d'une information de session. Il est donc nécessaire que ces deux entités se coordonnent au préalable pour que leurs sélections respectives soient cohérentes.

On se réfère maintenant à la **figure 3** qui présente un aperçu du procédé d'acheminement de données, selon un deuxième mode de réalisation de l'invention.

Lors d'une phase d'initialisation du procédé, le serveur 50 App1 émet lors d'une étape E1 émet un message vers un dispositif 80 Acc1 de l'infrastructure 10 de communication pour lui communiquer dans un message M0 des identifiants d'acheminement que le dispositif 80 doit interpréter pour acheminer les données des sessions de données vers le serveur 50. A des fins de simplification, le message M0 est directement transmis au dispositif 80 dans la figure 3. Selon une alternative, le message M0 peut être envoyé à un serveur de gestion de l'infrastructure 10 qui à son tour transmettra cette information aux différents dispositifs d'accès de l'infrastructure 10, notamment pour éviter aux différents serveurs de communiquer directement avec les dispositifs d'accès. Le message M0 peut en outre comporter des caractéristiques de sessions relatives aux identifiants d'acheminement de telle façon que le dispositif 80 puisse sélectionner une tranche de réseau adaptée aux caractéristiques des sessions. Selon un exemple, les identifiants d'acheminement peuvent correspondre à des identifiants de tranches utilisés dans l'infrastructure de communication et/ou à des données relatives à des options d'acheminement, par exemple lorsque des architectures de type CDN (en anglais Content Delivery Networks) sont mises en œuvre. A la réception du message M0 lors de l'étape E2, le dispositif 80 est capable d'acheminer les données des sessions à destination du serveur 50 sur les tranches de réseau de l'infrastructure de communication.

De façon correspondante, le serveur 40 App2 émet un message M'0 au dispositif 90 lors d'une étape E3 que le dispositif 90 reçoit lors d'une étape E4. Le serveur 40 est ainsi en mesure d'acheminer les données à destination du serveur 40. A des fins de simplification, les échanges ne sont pas représentés sur la figure mais les serveurs respectifs 50 et 40 informent également respectivement les dispositifs 90 et 80 de façon correspondante.

Lors d'une étape E5, le terminal 51 Term1 s'enregistre à l'infrastructure de communication en transmettant un message M1 au dispositif 90. Le terminal 51 informe le dispositif 90 dans ce message sur l'information de session par défaut utilisée de façon qu'une tranche de réseau par défaut soit pré-affectée par le dispositif 90. Le dispositif 90, à la réception du message M1 lors de l'étape E6, communique cette information aux autres dispositifs de façon que n'importe quel dispositif recevant les données du terminal soit en mesure d'associer la tranche de réseau par défaut.

Lors d'une étape E7, le terminal 51 émet un message M2 à destination du serveur 40 App2. Ce message M2 est un message HELLO de type HTTP/QUIC/UDP/IP. Le message M2 est acheminé dans l'infrastructure de communication 10 conformément à l'information de session par défaut ajouté par le terminal 51 et pour lequel le dispositif 90 de l'infrastructure de communication associe une tranche. Le message M2, transmis initialement au dispositif 90 qui le retransmet ensuite au serveur 40, comprend des informations de transport du protocole QUIC parmi lesquelles une information relative à la version du protocole QUIC utilisée ainsi qu'une version d'algorithme de compression de la signalisation. Sur la base de ces données reçues, le serveur 40 App2 détecte que la version du protocole QUIC utilisée ne convient pas, par exemple parce qu'une nouvelle version existe ou bien parce qu'elle n'est pas appropriée pour l'application. Le serveur souhaite en outre que les données suivantes émises depuis le terminal soient transportées sur une deuxième tranche de réseau plus adaptée aux caractéristiques de l'application. Selon une alternative, le serveur 40 exploite des informations de type métadonnées, par exemple de type CDNI (en anglais Content Distribution Network Information) présentes dans les données acheminées par le protocole QUIC pour déterminer l'identifiant d'acheminement. Les données peuvent être relatives au protocole QUIC ou bien être des données applicatives acheminées grâce au protocole QUIC. L'information de session présente dans le message M2 et correspondant ici à la version QUIC doit donc être modifiée par le terminal 51. Le serveur 40 détermine lors d'une étape E9 un nouvel identifiant d'acheminement permettant aux données de la session d'être acheminées sur une deuxième tranche du réseau de communication 10 plus adaptée.

Selon un exemple, dans le cas où l'identifiant d'acheminement envoyé au terminal 51 n'a pas été communiqué au dispositif 90 lors de l'étape E3, le serveur le transmet dans un message M3 au dispositif 90 lors d'une étape E10, ainsi que les caractéristiques associées à cet identifiant, pour s'assurer que les données ayant des caractéristiques correspondant à cet identifiant sont acheminées dans une deuxième tranche de réseau adéquate. Le dispositif 90, à la réception de ce message lors de l'étape E11, est capable d'acheminer les données de la session, mises à jour par le terminal en fonction de l'identifiant d'acheminement reçu, dans une deuxième tranche de réseau de l'infrastructure 10.

Lors d'une étape E12, le serveur 40 transmet un message M4 à destination du terminal 51 comprenant un identifiant d'acheminement. Ainsi, les données suivantes de la session initialisée par le terminal 51 via l'envoi du message M2 sont acheminées sur une deuxième tranche de réseau en adéquation avec les caractéristiques de la session. Le serveur 40 transmet, selon cet exemple, un message HTTP/QUIC/UDP/IP comprenant une information sur l'identifiant d'acheminement à utiliser pour la session, l'identifiant étant inséré dans une donnée du protocole QUIC. Dans cet exemple, le serveur 40 transmet une information sur le NSSAI au terminal 51 qui le reçoit lors de l'étape E13. Le serveur 40 indique en outre au terminal dans le message M4 d'utiliser une version plus récente du protocole QUIC. L'identifiant d'acheminement sera constitué de l'information NSSAI et de la version du protocole QUIC à utiliser.

Lors d'une étape E14, le terminal 51 configure une information de session en fonction de l'identifiant d'acheminement reçu dans le message M4. Selon un exemple, le terminal 51 met à jour la version du protocole QUIC conformément au contenu du message M4 et insère l'identifiant NSSAI dans une donnée du protocole QUIC. Dans cet exemple, l'information de session est identique à l'identifiant d'acheminement reçu mais selon d'autres exemples, l'information de session peut être différente de l'identifiant d'acheminement reçu. Dans le cas notamment où le terminal 51 ne peut insérer l'information NSSAI reçue, car il ne supporte pas une telle option, il met à jour la version de QUIC et possiblement insère en outre une information supplémentaire par exemple dans un champ du message transmis, par exemple un champ Flow Label et/ou Traffic Class de l'en-tête de datagrammes IPv6 ou le champ Type of service de l'en-tête de datagramme IPv4.

Lors d'une étape E15, le terminal 51 met à jour son enregistrement auprès de l'infrastructure de communication en transmettant un message M5 au dispositif 90. Le terminal 51 informe le dispositif 90 dans ce message sur l'information de session configurée lors de l'étape E14 de façon qu'une deuxième tranche de réseau soit affectée par le dispositif 90. Le dispositif 90, à la réception du message M5 lors de l'étape E16, communique cette information aux autres dispositifs de l'infrastructure 10 de façon que n'importe quel dispositif recevant les données du terminal soit en mesure d'associer la deuxième tranche de réseau associée à l'information de session. Cette communication aux autres dispositifs peut être réalisée, selon une alternative, via un serveur 70 de gestion de l'infrastructure 10 qui aura en charge ensuite d'informer les différents dispositifs d'accès. Selon cette alternative, le dispositif 90 transmet lors de l'étape F1 un message G1 comprenant l'information de session au serveur 71 de gestion qui, une fois qu'il la reçoit lors de l'étape F2, la retransmet au dispositif 80 lors d'une étape F3. Le dispositif 80 réceptionne le message G1 à l'étape F4 et est en mesure d'associer une deuxième tranche à un message comprenant l'information de session en provenance du terminal 51.

Selon une alternative, le dispositif 90 informe lors de l'étape E17 le serveur 40 de la mise à jour de la deuxième tranche de réseau pour les données de la session en transmettant un message M6. Ce message M6 comprend l'information de session configurée par le terminal 51 et la tranche associée, ce qui permet au serveur 40 de s'assurer d'une part que le dispositif 40 achemine les données de la session sur une tranche adaptée et d'autre part de connaître l'information de session configurée par le terminal 51 pour la session.

Lors d'une étape E19, selon une alternative, le terminal mémorise l'identifiant d'acheminement reçu pour la session. Cette mémorisation permet au terminal de configurer directement une information de session adaptée, au lancement d'une nouvelle session qui présenterait des paramètres de communication identiques à la précédente. Ainsi les premières données de cette nouvelle session sont directement acheminées sur une tranche de réseau correspondant aux caractéristiques de cette nouvelle session.

Lors de l'étape E20, le terminal 51 transmet les données de la session dans un message M7 au serveur 40, ces données étant mises à jour avec l'information de session configurée par le terminal 51. Ces données sont transmises via l'infrastructure de communication 10, et plus précisément le dispositif 90, qui achemine les données de la session sur une deuxième tranche de réseau adaptée aux caractéristiques de la session jusqu'au serveur 40.

Selon une alternative, lorsque le dispositif 90 de l'infrastructure associe une tranche à une information de session du message M7 transmis par le terminal, il garde en mémoire des données du message M7 reçu pour pouvoir associer la même tranche à des sessions ayant les mêmes données. Par exemple, le dispositif 90 peut garder en mémoire des données du message M7 (adresse IP source, adresse IP destination, port source, port destination, protocole, version, identifiant de tranche, ticket de session TLS, identifiant de connexion QUIC) dans le but de pouvoir associer des messages à la tranche sélectionnée. Par exemple, certains messages QUIC utilisent des en-têtes courts, ne possédant pas le champ version, mais pourront néanmoins être associées à la tranche sélectionnée pour le message M7 grâce à la mémorisation des données associées à la tranche lors d'une session précédente par exemple. En outre, les données mémorisées peuvent également être avantageusement utilisées pour l'attribution d'une tranche à des messages émis par le serveur 40 à destination du terminal 51.

Le serveur 40, à la réception du message M7 lors de l'étape E21, réceptionne les données de la session émises par le terminal 51 et vérifie que l'information de session configurée par le terminal correspond à l'identifiant d'acheminement transmis dans le message M4, si besoin en se référant en outre au message M6. Selon ce mode de réalisation, le serveur E21 vérifie que la version du protocole QUIC et l'information NSSAI correspondent aux informations qu'il a transmises précédemment.

On se réfère maintenant à la **figure** 4 qui présente un aperçu du procédé d'acheminement de données, selon un troisième mode de réalisation de l'invention.

Les étapes E1 à E4 sont identiques aux étapes correspondantes de la figure 3. Lors de l'étape E'5, le terminal 53 Term2 s'enregistre auprès du dispositif 80 Acc2 en envoyant un message M'1. Cette étape d'enregistrement permet, dans le cas d'un réseau 5G, notamment au terminal 53 de s'enregistrer auprès du NGRAN (en anglais New Génération Radio Access Networks) et, à la réception du message M'1 à l'étape E'6, au NGRAN de sélectionner un dispositif AMF (en anglais Access and Mobility Management Function) conformément à la spécification 3GPP TR 23.799 (version 14.0 16/12/2016).

Lors de l'étape E'7, le terminal 53 transmet un message M'2 à destination du serveur 50 Serv App2. Le message M'2 est un message de type (HTTP/2)/TLS/IP. A la réception du message M'2 le serveur 50 analyse les paramètres de communication du message M'2. Notamment, il examine les paramètres du protocole de transport TLS et les paramètres du protocole HTTP2 du message M'2 émis par le terminal 53.
Les paramètres de communication du protocole TLS, tels que définis dans la section 5 du document IETF RFC 8095 (Mars 2017) ainsi que dans le document IETF https://tools.ietf.org/html/draft-pauly-taps-transport-security-00 (03/07/2015) sont notamment analysés. Les paramètres HTTP/2, tels que définis dans le document IETF RFC 7540 (Mai 2015) sont également analysés par le serveur à la réception du message M'2 lors de l'étape E'8. Il est en outre à noter que le terminal 53 a utilisé un identifiant de première tranche de réseau par défaut pour émettre le message M'2. Selon cette alternative, le terminal 53 insère lui-même un identifiant de première tranche de réseau que l'infrastructure de communication 10 est capable d'exploiter pour acheminer les données émises par le terminal 53.

Lors de l'étape E'9, le serveur a analysé les différents paramètres et a constaté que la tranche de réseau ayant acheminé le message M'2, et dont il a obtenu l'identifiant dans le message M'2, n'est pas adapté à certains paramètres TLS et/ou HTTP/2 du message M'2. Le serveur 50 détermine, à partir des paramètres, un nouvel identifiant d'acheminement pour les prochains messages à émettre par le terminal 53 pour cette session (HTTP/2)/TLS/IP. Selon cet exemple, l'identifiant d'acheminement déterminé prend en compte des paramètres par exemple de chiffrement (TLS), de contrôle de flux (en anglais Flow control) et de multiplexage des flux applicatifs HTTP/2, de compression. Selon un autre exemple, et afin d'optimiser la détermination d'un identifiant d'acheminement, le serveur 50 ne considère que les versions des protocoles pour déterminer un identifiant d'acheminement car à une version de protocole, correspond un ensemble de paramètres. En se référant à une version de protocole dans le message M'2 reçu du terminal 53, le serveur 50 sait qu'un certain nombre de paramètres, parmi ceux définis dans les documents cités ci-avant, sont présents ou non dans le message M'2.

Les étapes E'10 à E'13 sont équivalentes aux étapes E10 à E13 de la figure 3 à la différence près que le message M'4 comprend un identifiant d'acheminement comprenant un identifiant de tranche du réseau 10 de communication ainsi que les paramètres de communication à mettre à jour pour le terminal. Selon une alternative, le serveur 50 peut déterminer plusieurs identifiants d'acheminement pour que les données émises par le terminal soient acheminées sur plusieurs tranches de réseau, dites deuxièmes tranches, au sein de l'infrastructure de communication. Cette alternative est notamment motivée par le développement de protocoles multi-chemins et la possibilité pour des terminaux d'être attachés simultanément à plusieurs infrastructures de communication
Le terminal 53, à la réception du message M'4 lors de l'étape E'13 configure l'identifiant de deuxième tranche reçu dans le message M'4 dans les messages de la session de données à émettre vers le serveur 50. Cet identifiant de deuxième tranche remplace l'identifiant de première tranche par défaut initialement utilisé. Le terminal 53 met également à jour les paramètres de communication transmis par le serveur 50. Cette mise à jour est facultative. En effet, le terminal dans le cas où il n'est pas apte à utiliser ces paramètres, ne pourra les configurer dans les messages à émettre.
Les étapes E'15 à E'19 correspondent aux étapes E15 à E19 de la figure 3.

Lors de l'étape E'20 le terminal 53 émet les données de la session vers le serveur 50, celles-ci ayant été configurées avec l'identifiant de deuxième tranche de réseau de l'infrastructure 10 de communication reçu du serveur 50. Ce mode de réalisation est notamment mis en œuvre dans le cas où le terminal 53 et le serveur 50 d'une part, et l'infrastructure 10 de communication sont administrés par un seul gestionnaire ou bien qu'une collaboration existe entre le gestionnaires du terminal 53, le gestionnaire du serveur 50 et le gestionnaire de l'infrastructure 10. Selon une alternative, le terminal 53 est en capacité de gérer plusieurs tranches de réseau et transmet les données de la session sur la ou les deuxième(s) tranches de réseau dont l'identifiant (ou les identifiants) lui a (ont) été communiqué(s) par le serveur 50.

Les modes de réalisation des figures 2, 3, 4 ne sont pas exclusifs et des combinaisons de ces modes est envisageable.

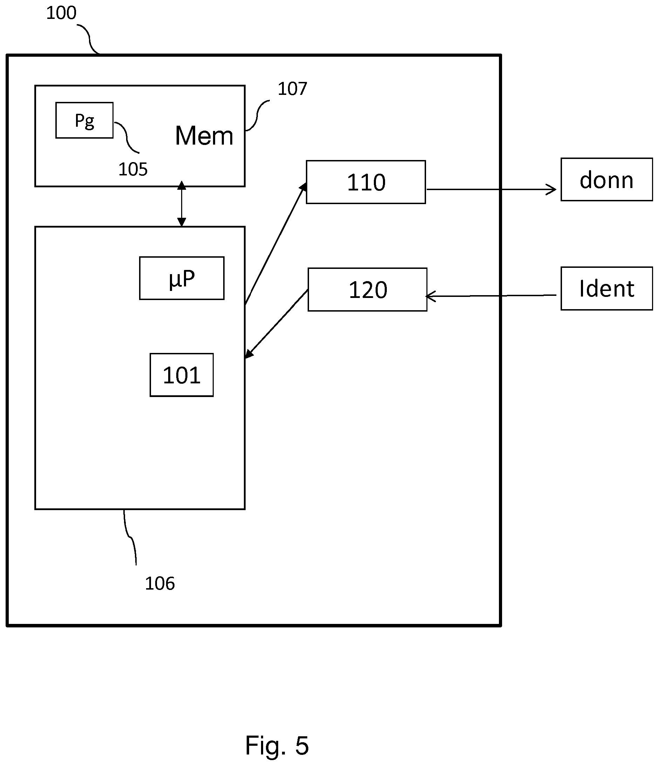

En relation avec la **figure 5****,** on présente un exemple de structure d'un dispositif d'acheminement, selon un aspect de l'invention.

Le dispositif 100 d'acheminement met en œuvre le procédé d'acheminement, dont différents modes de réalisation viennent d'être décrits.

Un tel dispositif 100 peut être mis en œuvre dans un terminal ou plus globalement dans un dispositif d'accès à une infrastructure (terminal fixe, terminal mobile, box). Le dispositif d'accès peut être un équipement pour clientèle résidentielle ou clientèle professionnelle, connecté à un réseau fixe ou à un réseau mobile.

Par exemple, le dispositif 100 comprend une unité de traitement 106, équipée par exemple d'un microprocesseur µP, et pilotée par un programme d'ordinateur 105, stocké dans une mémoire 107 et mettant en œuvre le procédé d'acheminement selon l'invention. A l'initialisation, les instructions de code du programme d'ordinateur 105 sont par exemple chargées dans une mémoire RAM, avant d'être exécutées par le processeur de l'unité de traitement 106.

Un tel dispositif 100 comprend :
- un récepteur 120, apte à recevoir en provenance du serveur au moins un identifiant d'acheminement déterminé en fonction d'au moins un paramètre de communication de la session,
- un module de configuration 101, apte à configurer une information de session en fonction de l'au moins un identifiant reçu,
- un émetteur 110, apte à émettre à destination du serveur les données suivantes de la session acheminées sur au moins une deuxième tranche correspondant à l'information configurée.

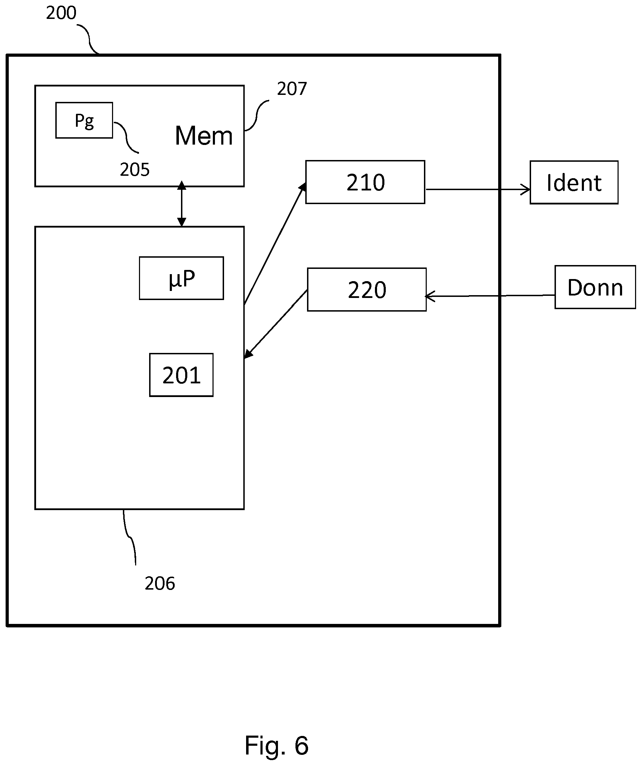

En relation avec la **figure 6****,** on présente un exemple de structure d'un dispositif de détermination, selon un aspect de l'invention.

Le dispositif 200 d'acheminement met en œuvre le procédé de détermination dont différents modes de réalisation viennent d'être décrits.

Un tel dispositif 200 peut être mis en œuvre dans un serveur ou plus largement dans un dispositif d'extrémité en capacité d'établir une session avec un terminal.

Par exemple, le dispositif 200 comprend une unité de traitement 206, équipée par exemple d'un microprocesseur µP, et pilotée par un programme d'ordinateur 205, stocké dans une mémoire 207 et mettant en œuvre le procédé d'acheminement selon l'invention. A l'initialisation, les instructions de code du programme d'ordinateur 205 sont par exemple chargées dans une mémoire RAM, avant d'être exécutées par le processeur de l'unité de traitement 206.

Un tel dispositif 200 comprend :
- un module 201 de détermination, apte à déterminer au moins un identifiant d'acheminement en fonction d'au moins un paramètre de communication de la session,
- un émetteur 210, apte à émettre à destination du terminal l'au moins un identifiant déterminé,
- un récepteur 220, apte à recevoir en provenance du terminal les données suivantes de la session acheminées sur au moins une deuxième tranche.

La mise en œuvre du procédé d'acheminement et du procédé de détermination est valide pour tout type d'infrastructure, fixe ou mobile et y compris pour les réseaux hybrides, fixes et mobiles, lorsqu'un terminal est attaché simultanément à une infrastructure fixe et une infrastructure mobile. Une session multi-chemins permet notamment d'améliorer la vitesse de transmission des données ainsi que la fiabilité d'acheminement des données. Le procédé d'acheminement autorise la mise en œuvre d'architectures multi-chemins et permet de sélectionner une tranche de réseau s'appuyant sur plusieurs chemins différents ou bien plusieurs tranches de réseau, chaque tranche permettant l'acheminement des données sur un ou plusieurs chemins.

Il est ainsi possible d'affecter une tranche de réseau à un terminal pour une session donnée indépendamment du type de réseau, et y compris si le terminal est multi-attaché. Outre le multi-attachement, une autre tendance de l'évolution des infrastructures concerne la confidentialité des communications et donc le chiffrement des données. Ce procédé est particulièrement adapté à ce contexte puisque les dispositifs intermédiaires, sinon quelques exceptions et pour des besoins généralement liés aux fonctions sécuritaires déployées par des administrations, ne peuvent accéder aux informations dites utiles transmises par les terminaux et/ou les serveurs. Le procédé d'acheminement, basé sur la contribution d'un terminal et d'un serveur pour l'affectation d'une tranche de réseau à un trafic donné est complètement adapté à un contexte de communications chiffrées. Les dispositifs intermédiaires acheminant le trafic contribuent néanmoins au procédé par des échanges avec le terminal et/ou le serveur mais sans avoir besoin de déchiffrer des données transmises dans un champ des données chiffré et destiné à un seul ou plusieurs destinataires bien définis.

## Revendications

1. Procédé d'acheminement de données d'une session initialisée entre un terminal et un serveur, sur une première tranche de réseau correspondant à un ensemble de fonctions de traitement des données d'une infrastructure de communication, mis en œuvre par le terminal et **caractérisé en ce qu'**il comprend les étapes suivantes :
- réception en provenance du serveur d'au moins un identifiant d'acheminement déterminé en fonction d'au moins un paramètre de communication de la session,
- configuration d'une information de session en fonction de l'au moins un identifiant reçu,
- émission à destination du serveur des données suivantes de la session acheminées sur au moins une deuxième tranche correspondant à l'information configurée.

2. Procédé d'acheminement, selon la revendication 1, où la session est chiffrée par le terminal et déchiffrée par le serveur.

3. Procédé d'acheminement, selon la revendication 1, où la session est initialisée par le terminal en configurant une information de session par défaut.

4. Procédé d'acheminement, selon la revendication 1, où l'information de la session est une donnée relative à une information NSSAI.

5. Procédé d'acheminement, selon la revendication 1, où le terminal met en mémoire l'au moins un identifiant reçu en fonction des paramètres de communication de la session.

6. Procédé de détermination d'au moins un identifiant d'acheminement de données d'une session initialisée entre un terminal et un serveur sur une première tranche de réseau correspondant à un ensemble de fonctions de traitement des données d'une infrastructure de communication, mis en œuvre par le serveur et **caractérisé en ce qu'**il comprend les étapes suivantes :
- détermination d'au moins un identifiant d'acheminement en fonction d'au moins un paramètre de communication de la session,
- émission à destination du terminal de l'au moins un identifiant déterminé,
- réception en provenance du terminal des données suivantes de la session acheminées sur au moins une deuxième tranche.

7. Procédé de détermination, selon la revendication 6, où l'au moins un paramètre est relatif à la couche transport de la session.

8. Procédé de détermination, selon la revendication 6, où l'au moins un paramètre est relatif au protocole QUIC.

9. Procédé de détermination, selon la revendication 6, où l'au moins un paramètre est relatif à la version de protocole de la couche transport.

10. Procédé de détermination, selon la revendication 6, où l'au moins un identifiant est émis dans une donnée d'un protocole de transport.

11. Dispositif d'acheminement de données d'une session initialisée entre un terminal et un serveur, sur une première tranche de réseau correspondant à un ensemble de fonctions de traitement des données d'une infrastructure de communication, mis en œuvre par le terminal et **caractérisé en ce qu'**il comprend :
- un récepteur, apte à recevoir en provenance du serveur au moins un identifiant d'acheminement déterminé en fonction d'au moins un paramètre de communication de la session,
- un module de configuration, apte à configurer une information de session en fonction de l'au moins un identifiant reçu,
- un émetteur, apte à émettre à destination du serveur les données suivantes de la session acheminées sur au moins une deuxième tranche correspondant à l'information configurée.

12. Dispositif de détermination d'au moins un identifiant d'acheminement de données d'une session initialisée entre un terminal et un serveur sur une première tranche de réseau correspondant à un ensemble de fonctions de traitement des données d'une infrastructure de communication, mis en œuvre par le serveur et **caractérisé en ce qu'**il comprend :
- un module de détermination, apte à déterminer au moins un identifiant d'acheminement en fonction d'au moins un paramètre de communication de la session,
- un émetteur, apte à émettre à destination du terminal l'au moins un identifiant déterminé,
- un récepteur, apte à recevoir en provenance du terminal les données suivantes de la session acheminées sur au moins une deuxième tranche.

13. Système d'acheminement de données d'une session initialisée entre un terminal et un serveur, sur une première tranche de réseau correspondant à un ensemble de fonctions de traitement des données d'une infrastructure de communication:
- un terminal comprenant un dispositif d'acheminement selon la revendication 11,
- un serveur comprenant un dispositif de détermination selon la revendication 12.

14. Programme d'ordinateur, **caractérisé en ce qu'**il comprend des instructions pour la mise en œuvre des étapes du procédé d'acheminement selon la revendication 1, lorsque ce procédé est exécuté par un processeur.

15. Support d'enregistrement lisible par un dispositif d'acheminement conforme à la revendication 11, sur lequel est enregistré le programme selon la revendication 14.

## Patentansprüche

1. Verfahren zur Übermittlung von Daten einer Sitzung, die zwischen einem Endgerät und einem Server initialisiert ist, auf einem ersten Netzwerk-Slice, der einem Satz von Funktionen zur Verarbeitung der Daten einer Kommunikationsinfrastruktur entspricht, das vom Endgerät durchgeführt wird und **dadurch gekennzeichnet ist, dass** es die folgenden Schritte umfasst:
- Empfangen, von dem Server, wenigstens einer Übermittlungskennung, die in Abhängigkeit von wenigstens einem Kommunikationsparameter der Sitzung bestimmt wird,
- Konfigurieren einer Sitzungsinformation in Abhängigkeit von der empfangenen wenigstens einen Kennung,
- Senden, an den Server, der folgenden Daten der Sitzung, die auf wenigstens einem zweiten Slice übermittelt werden, der der konfigurierten Information entspricht.

2. Übermittlungsverfahren nach Anspruch 1, wobei die Sitzung vom Endgerät verschlüsselt und vom Server entschlüsselt wird.

3. Übermittlungsverfahren nach Anspruch 1, wobei die Sitzung vom Endgerät initialisiert wird, indem eine Standardsitzungsinformation konfiguriert wird.

4. Übermittlungsverfahren nach Anspruch 1, wobei die Information der Sitzung ein Datenelement in Bezug auf eine NSSAI-Information ist.

5. Übermittlungsverfahren nach Anspruch 1, wobei das Endgerät die wenigstens eine empfangene Kennung in Abhängigkeit von den Kommunikationsparametern der Sitzung einspeichert.

6. Verfahren zur Bestimmung wenigstens einer Kennung zur Übermittlung von Daten einer Sitzung, die zwischen einem Endgerät und einem Server initialisiert ist, auf einem ersten Netzwerk-Slice, der einem Satz von Funktionen zur Verarbeitung der Daten einer Kommunikationsinfrastruktur entspricht, das vom Server durchgeführt wird und **dadurch gekennzeichnet ist, dass** es die folgenden Schritte umfasst:
- Bestimmen wenigstens einer Übermittlungskennung in Abhängigkeit von wenigstens einem Kommunikationsparameter der Sitzung,
- Senden der bestimmten wenigstens einen Kennung an das Endgerät,
- Empfangen, vom Endgerät, der folgenden Daten der Sitzung, die auf wenigstens einem zweiten Slice übermittelt werden.

7. Bestimmungsverfahren nach Anspruch 6, wobei der wenigstens eine Parameter auf die Transportschicht der Sitzung bezogen ist.

8. Bestimmungsverfahren nach Anspruch 6, wobei der wenigstens eine Parameter auf das QUIC-Protokoll bezogen ist.

9. Bestimmungsverfahren nach Anspruch 6, wobei der wenigstens eine Parameter auf die Protokollversion der Transportschicht bezogen ist.

10. Bestimmungsverfahren nach Anspruch 6, wobei die wenigstens eine Kennung in einem Datenelement eines Transportprotokolls gesendet wird.

11. Vorrichtung zur Übermittlung von Daten einer Sitzung, die zwischen einem Endgerät und einem Server initialisiert ist, auf einem ersten Netzwerk-Slice, der einem Satz von Funktionen zur Verarbeitung der Daten einer Kommunikationsinfrastruktur entspricht, die vom Endgerät eingesetzt wird und **dadurch gekennzeichnet ist, dass** sie Folgendes umfasst:
- einen Empfänger, der geeignet ist, von dem Server wenigstens eine Übermittlungskennung zu empfangen, die in Abhängigkeit von wenigstens einem Kommunikationsparameter der Sitzung bestimmt wird,
- ein Konfigurationsmodul, das geeignet ist, eine Sitzungsinformation in Abhängigkeit von der empfangenen wenigstens einen Kennung zu konfigurieren,
- einen Sender, der geeignet ist, an den Server die folgenden Daten der Sitzung zu senden, die auf wenigstens einem zweiten Slice übermittelt werden, der der konfigurierten Information entspricht.

12. Vorrichtung zur Bestimmung wenigstens einer Kennung zur Übermittlung von Daten einer Sitzung, die zwischen einem Endgerät und einem Server initialisiert ist, auf einem ersten Netzwerk-Slice, der einem Satz von Funktionen zur Verarbeitung der Daten einer Kommunikationsinfrastruktur entspricht, die vom Server eingesetzt wird und **dadurch gekennzeichnet ist, dass** sie Folgendes umfasst:
- ein Bestimmungsmodul, das geeignet ist, wenigstens eine Übermittlungskennung in Abhängigkeit von wenigstens einem Kommunikationsparameter der Sitzung zu bestimmen,
- einen Sender, der geeignet ist, die bestimmte wenigstens eine Kennung an das Endgerät zu senden,
- einen Empfänger, der geeignet ist, vom Endgerät die folgenden Daten der Sitzung zu empfangen, die auf wenigstens einem zweiten Slice übermittelt werden.

13. System zur Übermittlung von Daten einer Sitzung, die zwischen einem Endgerät und einem Server initialisiert ist, auf einem ersten Netzwerk-Slice, der einem Satz von Funktionen zur Verarbeitung der Daten einer Kommunikationsinfrastruktur entspricht:
- ein Endgerät, das eine Übermittlungsvorrichtung nach Anspruch 11 umfasst,
- einen Server, der eine Bestimmungsvorrichtung nach Anspruch 12 umfasst.

14. Computerprogramm, **dadurch gekennzeichnet, dass** es Anweisungen zur Durchführung der Schritte des Übermittlungsverfahrens nach Anspruch 1, wenn dieses Verfahren von einem Prozessor ausgeführt wird, umfasst.

15. Speichermedium, das von einer Übermittlungsvorrichtung nach Anspruch 11 gelesen werden kann, auf dem das Programm nach Anspruch 14 gespeichert ist.

## Claims

1. Method for routing data of a session initialized between a terminal and a server, over a first network slice corresponding to a set of data processing functions of a communication infrastructure, implemented by the terminal and **characterized in that** it comprises the following steps:
- receiving from the server at least one routing identifier determined on the basis of at least one communication parameter of the session,
- configuring a piece of session information on the basis of the at least one identifier received,
- transmitting to the server subsequent data of the session routed over at least a second slice corresponding to the configured information.

2. Routing method according to Claim 1, where the session is ciphered by the terminal and deciphered by the server.

3. Routing method according to Claim 1, where the session is initialized by the terminal by configuring a default piece of session information.

4. Routing method according to Claim 1, where the piece of session information is a data element relating to a piece of NSSAI information.

5. Routing method according to Claim 1, where the terminal stores in memory the at least one identifier received on the basis of the communication parameters of the session.

6. Method for determining at least one routing identifier of data of a session initialized between a terminal and a server, over a first network slice corresponding to a set of functions for processing the data of a communication infrastructure, implemented by the server and **characterized in that** it comprises the following steps:
- determining at least one routing identifier on the basis of at least one communication parameter of the session,
- transmitting to the terminal the at least one identifier determined,
- receiving from the terminal subsequent data of the session routed over at least a second slice.

7. Determination method according to Claim 6, where the at least one parameter relates to the transport layer of the session.

8. Determination method according to Claim 6, where the at least one parameter relates to the QUIC protocol.

9. Determination method according to Claim 6, where the at least one parameter relates to the protocol version of the transport layer.

10. Determination method according to Claim 6, where the at least one identifier is transmitted in a data element of a transport protocol.

11. Device for routing data of a session initialized between a terminal and a server, over a first network slice corresponding to a set of data processing functions of a communication infrastructure, implemented by the terminal and **characterized in that** it comprises:
- a receiver for receiving from the server at least one routing identifier determined on the basis of at least one communication parameter of the session,
- a configuration module for configuring a piece of session information on the basis of the at least one identifier received,
- a transmitter for transmitting to the server subsequent data of the session routed over at least a second slice corresponding to the configured information.

12. Device for determining at least one routing identifier of data of a session initialized between a terminal and a server, over a first network slice corresponding to a set of functions for processing the data of a communication infrastructure, implemented by the server and **characterized in that** it comprises:
- a determination module, for determining at least one routing identifier on the basis of at least one communication parameter of the session,
- a transmitter, for transmitting to the terminal the at least one identifier determined,
- a receiver, for receiving from the terminal the subsequent data of the session routed over at least a second slice.

13. System for routing data of a session initialized between a terminal and a server, over a first network slice corresponding to a set of functions for processing the data of a communication infrastructure:
- a terminal comprising a routing device according to Claim 11,
- a server comprising a determination device according to Claim 12.

14. Computer program, **characterized in that** it comprises instructions for implementing the steps of the routing method according to Claim 1 when this method is executed by a processor.

15. Recording medium, readable by a routing device according to Claim 11, on which the program according to Claim 14 is recorded.
